# EUROPÄISCHE PATENTANMELDUNG

(11) **EP 0 743 331 A1**
(43) Veröffentlichungstag der Anmeldung: **20.11.1996**
(21) Anmeldenummer: 95910827.5
(22) Anmeldetag: 01.02.1995
(51) Int. Cl.: C08G 12/12

(54) **VERFAHREN ZUM HERSTELLEN VON EINEM CARBAMID-FORMALDEHYD-HARZ UND EIN KONDENSAT ZU SEINER HERSTELLUNG**

(30) Priorität: 08.02.1994 RU 94004233; 08.02.1994 RU 94004569; 18.10.1994 RU 94039233; 18.10.1994 RU 94039237
(71) Anmelder: NAUCHNO-TEKHNOLOGICHESKOE PREDPRIYATIE "LIGAND", Ekaterinburg, 620002 (RU); Buryndin, Viktor Gavrilovich, Ekaterinburg, 600062 (RU); Glukhikh, Viktor Vladimirovich, Ekaterinburg, 620072 (RU); Lyakhov, Valery Konstantinovich, Nizhny Tagil, 622052 (RU); Mikheev, Anatoly Alexandrovich, Nizhny Tagil, 622001 (RU)
(72) Erfinder: BURYNDIN, Viktor Gavrilovich, Ekaterinburg, 600062 (RU); GLUKHIKH, Viktor Vladimirovich, Ekaterinburg, 620072 (RU); LYAKHOV, Valery Konstantinovich, Nizhny Tagil, 622052 (RU); MIKHEEV, Anatoly Alexandrovich, Nizhny Tagil, 622001 (RU)
(74) Vertreter: von Füner, Alexander, Dr.
(86) Internationale Anmeldenummer: RU9500017
(87) Internationale Veröffentlichungsnummer: WO9522133

(57) **Zusammenfassung**

Die Erfindung betrifft die chemische und holzverarbeitende Industrie und ermöglicht die Herstellung von Harnstoffformaldehydharz mit geringer Toxizität, das das erstklassige Haftvermögen und die für die industrielle Verwendung vorteilhaften ausgezeichneten Eigenschaften eines Bindemittels aufweist, und sie betrifft außerdem die Herstellung eines Harnstoffformaldehydkondensats, das eine gute Lagerbeständigkeit, eine geringe Toxizität, eine hohe Frostbeständigkeit und einen erhöhten Gehalt an Trockenrückstand aufweist. Das erfindungsgemäß vorgeschlagene Harnstoffformaldehydharz wird dadurch erhalten, daß man eine Kondensationsreaktion von Harnstoff und Formaldehyd durchführt. Die für diese Reaktion in der ersten Stufe des erfindungsgemäßen Verfahrens verwendete wäßrige Harnstofflösung ist ein Harnstoffformaldehydharzkondensat oder ein Gemisch aus verschiedenen Stoffen, das die folgenden Substanzen (in Gew.-%) enthält: Harnstoff - 11,4 bis 20,9; Monomethylolharnstoff - 24,9 bis 33,1; Dimethylolharnstoff - 4,2 bis 9,2; Formaldehyd - 1,9 bis 2,4; Wasser - Rest. Formaldehyd wird zugeführt, bis das Molverhältnis von Harnstoff : Formaldehyd 1,0:(1,75-2,1) bei einem pH von 6,0-8,5 beträgt. Die zweite Stufe der Kondensation wird bei einem pH von 3,9-5,1 und einer Temperatur von 82-98 °C durchgeführt. Das Kondensationsprodukt wird gekühlt und verdampft, und es wird eine zusätzliche Menge an Harnstoff zugegeben, bis ein Molverhältnis (Harnstoff : Formaldehyd) von 1,0:(1,0-2,0) bei einem pH von 7,5-8,5 und einer Temperatur von 40-65 °C erreicht ist, wobei das Harz anschließend gekühlt und stabilisiert wird. Das erfindungsgemäß vorgeschlagene Harnstoffformaldehydkondensat wird durch Mischen des überschüssigen Harnstoffs und der wäßrigen Formaldehydlösung in Gegenwart eines alkalischen Agens bei einem pH von 8,2-8,8 erhalten, wobei das Molverhältnis von Harnstoff : Formaldehyd (0,8-2,0):1,0 beträgt. Die so erhaltene Lösung wird anschließend bei einer Temperatur von 5-45 °C kondensiert, und das Kondensationsprodukt wird durch Stehenlassen während eines Zeitraums von mindestens drei Stunden stabilisiert. Mit Hilfe von wäßrigen Lösungen aus Alkalimetallhydroxiden, Aminoverbindungen oder Gemischen davon wird ein alkalisches Medium geschaffen.

## Beschreibung

### Gebiet der Technik

Die Erfindung betrifft die chemische und holzverarbeitende Industrie, und insbesondere die Erzeugung synthetischer Polymerstoffe und kann in Betrieben verwendet werden, die Formaldehyd und Produkte seiner Kondensation mit Harnstoff erzeugen.

### Früherer Stand der Technik

Allgemein bekannt aus Wissenschaft und Technik ist ein Verfahren zur Herstellung von Harnstoffharz auf der Basis von Harnstoffformaldehydkondensat zum Beispiel zum Verkleben von Papier, Holz oder Pappe, das darin besteht, daß man eine vorgängig bereitgestellte Kondensationslösung mit einem Molverhältnis von Harnstoff : Formaldehyd von 1-1,8 : 2,3 mit einer zusätzlichen Menge Harnstoff zuerst bei einem pH von 6 - 10 und dann bei einem pH von 5,0 unter Erwärmen auf 90°C während 2 bis 5 Stunden bis zum Endmolverhältnis von Harnstoff : Formaldehyd von 1 : 0,4-1,4 mischt und anschließend das Reaktionsprodukt verdampft und abkühlt (GB-A Nr. 1480787, IPK C 08 G 12/12, B 32 B 7/12, 27/04, 27/42, 1977).

Bekannt ist ferner ein industriell angewandtes mehrstufiges Verfahren zur Herstellung von Harnstoffharzen in Medien mit wechselnder Acidität, bei dem man auf der ersten Stufe der Kondensationsreaktion durch Mischen der wäßrigen Harnstofflösung und der mit Ätznatron neutralisierten wäßrigen Formaldehydlösung (bis zu einem pH von 7,0-8,5) bei einem Molverhältnis von Harnstoff : Formaldehyd von ca. 1,0:2,0 die Kondensationslösung herstellt, diese dann während 30 bis 60 Minuten auf 80 bis 100°C erwärmt, das Reaktionsgemisch im sauren Medium bei einem pH von 4 bis 5 während 30 bis 60 Minuten bei einer Temperatur von 90- 100°C kondensiert, das Kondensationsprodukt nachfolgend bis zu einem pH von 7,0 bis 8,0 neutralisiert, bei einer Temperatur von 70 bis 80°C im Vakuum trocknet und mit einer zusätzlichen Harnstoffmenge in neutralem oder schwach alkalischem Medium bei einer Temperatur von 60 bis 70°C während 30 bis 60 Minuten nachkondensiert, wobei das erforderliche Gesamtmolverhältnis von Harnstoff: Formaldehyd im Harz auf 1 : 1,0-2,0 gebracht wird (Anochin A.E., Ceboksarova Z.A. Novyj podchod k ocenke technologii proizvodstva i kacestva karbamidnych smol. Derevoobrabatyvajuscaja promyslennost' Nr. 2, 1992, S. 12-16).

Bekannt sind Verfahren zur Herstellung von Harnstoffharzen auf der Basis von Harnstoffformaldehydkondensat. Bekannt ist zum Beispiel ein Verfahren zur Herstellung von schwach toxischem Harnstoffharz, das darin besteht, daß man zuerst durch Sieden eines Überschusses, bezogen auf den Harnstoff, an wäßriger Formaldehydlösung das Harnstoffformaldehydkondensat herstellt und anschließend das Kondensationsprodukt neutralisiert, wobei zur Verminderung des Gehalts an freiem Formaldehyd und zur Steigerung des Gehalts an Trockenrückstand eine obligatorische Verfahrensstufe die nachfolgende Verdampfung oder Vakuumbehandlung des erhaltenen Produktes unter Erwärmung ist und dem auf diese Weise erhaltenen Harnstoffformaldehydkondensat in schwach alkalischem Medium unter Erwärmung eine zusätzliche Harnstoffmenge bis zur Erreichung eines Molverhältnisses von Harnstoff: Formaldehyd von 1 : 1,1-1,2 zugesetzt wird, wonach das Endprodukt verdampft und abgekühlt wird (A.E. Anochin Zamenitel' formalina pri ekologi 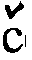 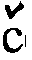 eski 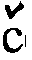 istom proizvodstve karbamidnych smol. Derevoobrabatyvaju 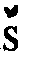 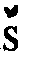 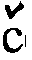 aja promy 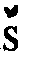 lennost', Nr. 12, 1990, S. 11-12).

Bekannt ist ferner ein Verfahren zur Herstellung von Harnstoffformaldehydkondensat, das darin besteht, daß man den Überschuß, bezogen auf den Harnstoff, eines wäßrigen Formaldehydgemischs bei einem Molverhältnis von 4,0-5,5 und einem pH von 4 bis 5,5 während 10 bis 60 Minuten siedet, das Reaktionsgemisch unter Sieden und bei einem pH von 4 bis 6 bis zur Erzielung einer Viskosität von 8 bis 20 Poise und einem Gehalt an Trockenrückstand von 60 % nachreifen läßt. Das fertige Produkt wird dann abgekühlt, neutralisiert und bis zu einem Gehalt an Trockenrückstand von 65 % vakuumbehandelt (FR-A Nr. 2338956, IPK 3 C 08 G 12/12, 1977).

### Offenbarung der Erfindung

Die technische Aufgabe der Erfindung ist die Herstellung von Harnstoffformaldehydharz mit niedrigem Gehalt an freiem Formaldehyd und erhöhter Klebrigkeit, das sehr gute Kleb- und Verarbeitungseigenschaften des Bindemittels auf seiner Grundlage gewährleistet, sowie die Herstellung eines lagerungsbeständigen Harnstoffformaldehydkondensats mit niedrigem Gehalt an freiem Formaldehyd, vermindertem Gefrierpunkt und erhöhtem Gehalt an Trockenrückstand bei minimalem Arbeits- und Energieaufwand.

Das erfindungsgemäße Verfahren zur Herstellung von Harnstoffformaldehydharz besteht darin, daß man auf der ersten Stufe der Kondensationsreaktion als wäßrige Harnstofflösung für die Herstellung der Kondensationslösung ein Harnstoffformaldehydkondensat oder ein Gemisch einzelner Stoffe folgender Zusammensetzung (in %) verwendet:

| | |
|---|---|
| Harnstoff | 11,4-20,9 |
| Monomethylharnstoff | 24,9-33,1 |
| Dimethylharnstoff | 4,2-9,2 |
| Formaldehyd | 1,9-2,4 |
| Wasser | Rest |

Das beanspruchte Harnstoffformaldehydkondensat erhält man durch Mischen eines Überschusses an Harnstoff und einer wäßrigen Formaldehydlösung in Anwesenheit eines alkalischen Agens bei einem Molverältnis von Harnstoff : Formaldehyd von 0,8-2,0 : 1,0 und einem pH von 8,2-8,8, Kodensation der erhaltenen Lösung bei einer Temperatur von 5-45°C in Anwesenheit eines alkalischen Agens und nachfolgende Reifung des erhaltenen Produktes während wenigstens 3 Stunden.

Als alkalisches Agens verwendet man Stoffe, ausgewählt aus der Gruppe wäßriger Lösungen von Alkalimetallhydroxiden, Aminoverbindungen oder deren Gemischen untereinander.

Das vorgeschlagene Verfahren zur Herstellung von Harnstoffformaldehydharz besteht darin, daß man auf der ersten Stufe der Kondensationsreaktion die wäßrige Lösung harnstoffhaltiger Stoffe der beanspruchten Zusammensetzung oder das Harnstoffformaldehydkondensat unter Erwärmen mit Formaldehyd bis zu einem Molverhältnis von Harnstoff : Formaldehyd von 1,0 : 1,75-2,1 und einem pH von 6,0-8,5 mischt, auf der zweiten Stufe die Kondensation der erhaltenen Lösung in schwachsaurem Medium bei einem pH von 3,9-5,1 und bei einer Temperatur von 82-98°C unter nachfolgender Abkühlung und Verdampfung des Kondensationsproduktes durchführt, dann auf einer dritten Stufe dem erhaltenen Produkt eine zusätzliche Harnstoffmenge bis zu einem Molverhältnis von Harnstoff : Formaldehyd von 1,0 : 1,0-2,0 zusetzt und bei einem pH von 7,5-8,5 und einer Temperatur von 40-65°C nachkondensiert und abschließend das Harz abkühlt und stabilisiert.

### Beste Varianten der Offenbarung der Erfindung

### Variante 1

### Bereitstellung des Ausgangsstoffs

Der Harnstoff wird mit Hilfe eines Systems von Förderern bereitgestellt, zerkleinert und gelangt dann in eine Massendosiervorrichtung.

In einen mit Rührwerk und Schlangenrohr ausgestatteten Mischer werden aus einem Meßgefäß 8,2 m³ technisches Formalin mit 37 % Formaldehyd gegossen. Dem Schlangenrohr des Mischers wird dann stark gekühltes Wasser mit einer Temperatur von 8-14°C zugeführt. Danach wird unter Rühren in den Mischer über eine Meßdosiervorrichtung eine solche theoretische Menge an alkalischem Agens gegossen, daß der pH-Wert des neutralisierten Formaldehyds einen Wert von 8,2-8,8 erreicht.

Als alkalisches Agens verwendet man eine 3 - 4 %-ige Lösung von Alkalimetallhydroxiden, 25 %-igen wäßrigen technischen Ammoniak (Ammonikwasser), wäßrige Lösungen von Polyethylenpolyaminen der Marken A, B, C und D (technische destillierte 2-, 3- und 4-Fraktionen) und von Ethanolaminen wie Monoethanolamin, Diethanolamin, Hexamethylentetramin (Urotropin) sowie ihre Gemische.

### Herstellung des beanspruchten Kondensats

Das Kondensat stellt man in einem 30 m³-Reaktor her, der mit einem Schlangenrohr für die Dampf- und Wasserzufuhr, einem Rührwerk und Geräten für die Temperatur- und Niveaumessung ausgestattet ist.

Der Reaktor wird bei einem Molverhältnis von Harnstoff : Formaldehyd = 0,8; 1,4; 1,6; 2,0 :1,0 mit den Ausgangsstoffen beschickt.

Die Rezeptur für die Beschickung mit den Ausgangsstoffen für die Herstellung des Kondensats bei einem Molverhältnis von Harnstoff : Formaldehyd von 1,6 : 1,0 ist in Tabelle 1 angegeben.

**Tabelle 1**

| Bezeichnung des Ausgangsstoffs | Massenanteil der Hauptkomponente | Rezeptur für die Beschickung | | | |
|---|---|---|---|---|---|
| | | Hauptkomponente, M | je 1000 kg Kondensat, kg | je Arbeitsgang | |
| | | | | kg | l |
| Harnstoff | nat. Gew. | 1,6 | 542,1 | 15.873 | - |
| Formalin | 37 % | 1,0 | 457,9 | 13.406 | 12.299 |
| Ätznatron | 3 % | - | nach Berechnung | 171 | 165,7 |
| Insgesamt | | | 10.000 | 29.450 | 24.139 |

Die Berechnung des Ansatzes entsprechend den übrigen Molverhältnissen erfolgte in analoger Weise anhand bekannter Formeln.

Der Reaktor wird unter Rühren mit der theoretischen Menge an vorgängig neutralisiertem Formalin und Harnstoff beschickt, wonach die Reaktorheizung eingeschaltet und die Umsetzung bei einer Temperatur von 5-45°C durchgeführt wird. Gegebenenfalls wird der pH der Lösung mit Hilfe eines alkalischen Agens auf den vorgegebenen Wert eingestellt. Das erhaltene Kondensationsprodukt wird dann abgekühlt, in einen hermetisch verschlossenen Verbrauchsbehälter umgepumpt und während wenigstens drei Stunden reifen gelassen. Bei der Reifung wird die Lösung im Hinblick auf Zusammensetzung und Gehalt an Mono- und Dimethylharnstoff stabilisiert, was ihre ausreichend hohe Lagerungsbeständigkeit gewährleistet.

Das erhaltene Kondensationsprodukt hat folgende Zusammensetzung (in %):

| | |
|---|---|
| Harnstoff | 11,4-20,9 |
| Monomethylharnstoff | 24,9-33,1 |
| Dimethylharnstoff | 4,2-9,2 |
| Formaldehyd | 1,9-2,4 |
| Wasser | Rest |

Die Bedingungen für die Herstellung der beanspruchten Kondensate sind in Tabelle 3 angegeben. Die Parameter der erhaltenen Kondensate sind in Tabelle 2 und Tabelle 4 angegeben (der Massenanteil an freiem Formaldehyd und Trockenstoffen wurde drei Stunden nach Beendigung der Kondensation bestimmt).

**Tabelle 2**

| Parameter | Parameterwert |
|---|---|
| Aussehen | homogene klare Flüssigkeit |
| Dichte bei 20°C , kg/m³ | 1.200 - 1.230 |
| Massenanteil an freiem Formaldehyd, % | 1,1 - 2,4 |
| Massenanteil an Trockenstoffen, % | 62,2 - 74,8 |
| Gefriertemperatur, °C | -14 - -20 |
| pH-Wert | 8,2 - 8,8 |

**Tabelle 3**

| Reaktionsbedingungen für die Kondensation | Beispiele | | | | | |
|---|---|---|---|---|---|---|
| | erfindungsgemäß | | | | | bekannt |
| | 1 | 2 | 3 | 4 | 5 | 6 |
| Molverhältnis H:F | 0,8:1 | 1,4:1 | 1,6:1 | 2,0:1 | 1,4:1 | 1:2,1 |
| Kondensationstemperatur, °C | 5 | 20 | 20 | 45 | 30 | 98 |

| **Alkalisches Agens** | | | | | | |
|---|---|---|---|---|---|---|
| Technische wäßrige 25 %-ige Ammoniaklösung, | - | + | - | - | + | - |
| Polyethylenpolyamine der Marke A | + | - | - | - | - | - |
| Diethanolamin | - | - | - | + | - | - |
| Ätznatron | - | - | + | - | + | + |
| Wasser | + | + | + | + | + | + |
| pH-Wert | 8,2 | 8,5 | 8,5 | 8,8 | 8,6 | 8,0 |

**Tabelle 4**

| Parameter | Beispiele | | | | | |
|---|---|---|---|---|---|---|
| | erfindungsgemäß | | | | | bekannt |
| | 1 | 2 | 3 | 4 | 5 | 6 |
| Massenanteil an Trockenstoffen, % | 62,2 | 70,1 | 71,2 | 71,2 | 70,5 | 64,2 |
| Massenanteil an freiem Formaldehyd, % | 1,8 | 1,29 | 1,9 | 1,1 | 1,45 | 1,2-2,8 |
| Massenanteil an Methylolgruppen, | 14,5 | 12,2 | 14,8 | 10,8 | 11,4 | 22,3 |
| Gefriertemperatur, °C | -15 | -18 | -14 | -18 | -20 | -12 |

### Variante 2

### Herstellung der Kondensationslösung durch Mischen der einzelnen Stoffe

In einem mit Rührwerk und Schlangenrohr ausgestatteten 20 m³-Mischer werden 9.000 l Formalin vorgelegt. Die Beschickung erfolgt bei eingeschaltetem Rührwerk. Das Formalin wird mit Ammoniakwasser bis zu einem pH von 6,0 bis 8,5 neutralisiert. Danach wird der Mischer mit der theoretischen Menge der wäßrigen Lösung der Derivate der harnstoffhaltigen Verbindungen in einer Menge beschickt, die ein Gesamtmolverhältnis von Harnstoff : Formaldehyd von 1,0 : 1,75-2,1 gewährleistet. Die wäßrigen Lösungen der Derivate der harnstoffhaltigen Verbindungen haben die in Tabelle 5 angeführten Zusammensetzungen. Die Stoffbilanz für die Herstellung der Kondensationslösung unter Verwendung der Zusammensetzung 2 (Tabelle 5) ist in Tabelle 6 dargestellt.

**Tabelle 5**

| Zusammensetzung | | Gehalt, Gew.-% | | | |
|---|---|---|---|---|---|
| Nr. | H:F | Harnstoff | Monomethylolharnstoff | Dimethylolharnstoff | freier Formaldehyd |
| 1 | 2,0:1 | 20,9 | 28,6 | 5,4 | 2,1 |
| 2 | 1,6:1 | 11,4 | 33,1 | 9,2 | 1,9 |
| 3 | 1,2:1 | 15,1 | 24,9 | 4,2 | 2,4 |

**Tabelle 6**

| Ausgangsstoff | Gewichtsanteil der Hauptkomponenten, % | Ansatz | |
|---|---|---|---|
| | | kg | l |
| Formalin | 37 | 9.810,0 | 9.000,0 |
| Ammoniakwasser | 25 | 328,9 | 362,6 |
| Lösung harnstoffhaltiger Verbindungen | 38 | 9.738,6 | 7.982,5 |

Die Ansatzberechnung für die übrigen Zusammensetzungen erfolgt nach bekannten Verfahren.

Die Beschickungssteuerung erfolgt nach einem beliebigen auf dem vorliegenden Gebiet der Technik bekannten Verfahren. Die Dauer für das Rühren der Kondensationslösung beträgt 15 bis 20 Minuten, wonach die Probe zur Ermittlung des Brechungskoeffizienten gesammelt wird. Der Brechungskoeffizient bei einer Temperatur von 20 bis 60°C und einem pH von 6,0-8,5 beträgt 1,409 bis 1,412.

Die hergestellte Kondensationslösung wird dann bei einer Temperatur von höchstens 60°C in einen Verbrauchsbehälter gepumpt, aus dem dann die Lösung mit Hilfe von Pumpen kontinuierlich der Kondensation im Reaktor zugeführt wird.

### Herstellung der Kontrollkondensate

Die Herstellung der Kondensationslösungen und die Bedingungen für die Kondensationsreaktion entsprechen den Beispielen gemäß Variante 1. Das Kondensat wird bei einem Molverhältnis von Harnstoff: Formaldehyd von 1,0:4,8; 0,7:1,0 und 2,1:1,0 hergestellt.

Die Durchführung der Reaktion bei einem Molverhältnis von Harnstoff zu Formaldehyd von 1:4,8 unter den beanspruchten Bedingungen führt dazu, daß das Kondensationsprodukt einen hohen Gehalt an freiem Formaldehyd bei niedriger Konzentration an Trockenstoffen aufweist. Wird die Reaktion bei einem geringeren oder höheren Harnstoffüberschuß als dem beanspruchten (0,7:1; 2,2:1) durchgeführt, so weist das Kondensationsprodukt zwar Parameter im Hinblick auf Gehalt an freiem Formaldehyd und Methylolgruppen sowie an Trockenrückstand auf, die mit den beanspruchten vergleichbar sind, ist jedoch nicht lagerungsbeständig.

### Herstellung des Harnstoffformaldehydharzes

Die nach Variante 1 (Beispiel 1 - 5, Tabelle 3) oder nach Variante 2 (Zusammensetzungen 1 - 3, Tabelle 5) hergestellte Kondensationslösung wird dann in saurem Medium weiterkondensiert.

### Kondensation in der sauren Phase

Die Kondensation der erhaltenen Lösung wird aufeinanderfolgend in zwei Turmreaktoren (Fassungsvermögen 6 m³) durchgeführt, die mit einem Heiz- bzw. Kühlmantel und einem Ankerrührwerk ausgestattet sind. Der Reaktor ist mit einem Rückflußkühler verbunden.

Die Kondensationslösung wird der ersten Reaktorstufe aus dem Verbrauchsbehälter zugeführt. Die Zufuhrgeschwindigkeit wird innerhalb eines Bereichs von 3.500 bis 10.000 l/h eingestellt. Die Kondensation wird bei einer Temperatur von 82 bis 98°C durchgeführt. Während der Kondensation kommt es zu einer spontanen Entsäuerung des Reaktionsmediums und der pH sinkt auf 3,9 bis 5,1 ab. Im Bedarfsfalle wird der pH des Reaktionsgemisches neu eingestellt.

Die Beendigung der Kondensation stellt man anhand der Bildung einer Trübe bei Zugabe einer Probe des heißen Harzes zu gekühltem Wasser fest. Das Reaktionsgemisch hat auf dieser Stufe der Kondensation bei einer Temperatur von 20°C eine Viskosität von 60 bis 80 mPa.s und einen Brechungskoeffizienten von 1,420 bis 1,424.

Das kondensierte Harz wird aus dem Reaktor kontinuierlich mit Hilfe einer Pumpe der Trocknung zugeführt. Ansaugseitig wird der Pumpe kontinuierlich eine wäßrige Lösung des alkalischen Agens zugeführt, um den pH auf einem Wert von 7,5 - 8,5 zu halten. Die Trocknung des Harzes erfolgt in aus einem Scheider, einer Heizkammer und einer Umwälzpumpe bestehenden Verdampfern. Die Beheizung erfolgt mit Dampf unter einem Druck von bis 0,5 MPa. Die Trocknung des Harzes wird bei einer Temperatur von 62 bis 85°C und unter einem Vakuum von 0,06 MPa durchgeführt. Das erhaltene Harz weist einen Brechungsindex von 1,460 bis 1,470 und bei einer Temperatur von 20°C eine Viskosität von 900 bis 1100 mPa.s auf.

Die Bedingungen für die Durchführung der Kondensation sind in den Tabellen 7 und 8 angegeben. Die Parameter des erhaltenen Harzes sind in den Tabellen 9 und 10 angegeben. Der Formaldehydgehalt im DStP wird nach der Perforationsmethode ermittelt.

**Tabelle 7**

| Reaktionsbedingungen für die Harzsynthese | Beispiele | | | | | |
|---|---|---|---|---|---|---|
| | erfindungsgemäß | | | | | bekannt |
| | 1 | 2 | 3 | 4 | 5 | 6 |
| | | | | | | |

| Herstellung der Kondensationslösung | | | | | | |
|---|---|---|---|---|---|---|
| Molverhältnis Harnstoff: Formaldehyd im Kondensat | 0,8:1 | 1,4:1 | 1,6:1 | 2,0:1 | 1,4:1 | - |

| **Alkalisches Agens:** | | | | | | |
|---|---|---|---|---|---|---|
| 1. technischer Ammoniak, 25 %-ig | - | + | | - | + | - |
| 2. Polyethilenpolyamin der Marke A | + | - | | - | - | - |
| 3. Ethanolamine | - | - | | + | - | - |
| 4. Ätznatron | - | - | + | - | + | + |
| 5. Wasser | + | + | + | + | + | + |
| Molverhältnis Harnstoff: Formaldehyd in der fertigen Kondensatlösung | 1:1,75 | 1:1,9 | 1:2,0 | 1:2,0 | 1:2,1 | 1:2,0 |

| Kondensation im sauren Medium | | | | | | |
|---|---|---|---|---|---|---|
| pH | 5,1 | 4,5 | 4,6 | 4,1 | 3,9 | 4,5 |
| Temperatur, °C | 92 | 98 | 82 | 88 | 82 | 98 |

| Kondensation mit zusätzlicher Harnstoffmenge | | | | | | |
|---|---|---|---|---|---|---|
| pH | 8,5 | 8,5 | 8,0 | 8,0 | 7,5 | 7,5 |
| Temperatur, °C | 50 | 55 | 60 | 60 | 40 | 60 |
| Molverhältnis Harnstoff: Formaldehyd im Harz | 1:1 | 1:1,2 | 1:1,2 | 1:1,6 | 1:2 | 1:1,2 |

**Tabelle 8**

| Reaktionsbedingungen für die Kondensation | Erfindungsgemäß | | | Bekannt |
|---|---|---|---|---|
| | 1 | 2 | 3 | 4 |
| | | | | |

| Herstellung der Kondensationslösung | | | | |
|---|---|---|---|---|
| Gemisch der Einzelkomponenten, Gew.-% | | | | |
| Harnstoff | 20,9 | 11,4 | 15,1 | 26,5 |
| Monomethylolharnstoff | 28,6 | 33,1 | 24,9 | |
| Dimethylolharnstoff | 5,4 | 9,2 | 4,2 | |
| Formaldehyd | 2,1 | 1,9 | 2,4 | |
| Wasser | 43,0 | 44,4 | 53,4 | 73,5 |
| pH | 6,0 | 8,5 | 7,0 | 7,0-8,5 |
| Molverhältnis Harnstoff:Formaldehyd in der Lösung | 1:1,75 | 1:2,0 | 1:2,1 | 1:2,0 |
| Temperatur, °C | 60 | 40 | 20 | 30-40 |

| Kondensation im sauren Medium | | | | |
|---|---|---|---|---|
| pH | 4,5 | 4,6 | 4,7 | 4,5-4,7 |
| Temperatur, °C | 92 | 82 | 98 | 96-100 |

| Kondensation mit zusätzlicher Harnstoffmenge | | | | |
|---|---|---|---|---|
| Molverhältnis Harnstoff:Formaldehyd im Harz | 1:1,15 | 1:1,2 | 1:1,2 | 1:1,15-1,20 |
| pH | 7,5 | 8,0 | 8,5 | 7,5-8,5 |
| Temperature, °C | 55 | 60 | 65 | 55-65 |

**Tabelle 9**

| Harzparameter | Beispiele | | | | | |
|---|---|---|---|---|---|---|
| | erfindungsgemäß | | | | | bekannt |
| | 1 | 2 | 3 | 4 | 5 | 6 |
| Massenanteil an Trockenrückstand, % | 68 | 68 | 72,3 | 66 | 68 | 66 |
| Massenanteil an freiem Formaldehyd, % | 0,05 | 0,07 | 0,09 | 0,20 | 0,25 | 0,25 |
| Viskosität bei 20°C, mPa.s | 360 | 280 | 420 | 620 | 290 | 300 |
| Konzentration der Wasserstoffionen, pH | 7,8 | 8,4 | 8,5 | 8,0 | 7,9 | 8,2 |
| Dauer der Gelbildung mit 1 %-igem Ammoniumchlorid bei 20°C, h | 22 | 24 | 28 | 21 | 25 | 21 |
| 100°C, h | 60 | 65 | 55 | 60 | 70 | 50-70 |
| Maximale Mischbarkeit des Harzes mit Wasser bei 20°C, Vol.t. | 1:4 | 1:5 | 1:8 | 1:10 | 1:20 | 1:3 |
| Spaltfestigkeit an der Kelbstoffschicht von Furnier nach Einweichen der Prüflinge in Wasser während 24 h, MPa | 1,8 | 1,7 | 2,0 | 2,2 | 1,9 | 1,6 |
| Klebrigkeit des fertigen Harzes, s | 10 | 12 | 15 | 25 | 22 | 5 |
| Gehalt an Formaldehyd in Holzspanplatten, mg/100 g | 4 | 6 | 7 | keiner | keiner | 29 |

### Kondensation mit einer zusätzlichen Harnstoffmenge

Das erhaltene Harz wird der Vorrichtung zur Abkühlung auf eine Temperatur von 55 bis 85°C zugeführt und danach mit einer zusätzlichen Menge Harnstoff bei einem Molverhältnis von Harnstoff : Formaldehyd = 1:1,0-2,0 nachkondensiert. Als harnstoffhaltige Stoffe verwendet man Harnstoff oder das beanspruchte Harnstoffformaldehydkondensat. Die Kondensation erfolgt bei einer Temperatur von 40 bis 65°C und einem pH von 7,5 bis 8,5 während 35 bis 40 Minuten. Für die Aufrechterhaltung des erforderlichen pH verwendet man eine Lösung des alkalischen Agens.

Als alkalisches Agens wird eine 3-4 %-ige Lösung von Alkalimetallhydroxiden, 25 %-iger technischer wäßriger Ammoniak (Ammoniakwasser), wäßrige Lösungen von Polyethylenpolyaminen der Marken A, B, C und D (technische destillierte 2-, 3- und 4-Fraktionen), Ethanolaminen wie Monoethanolamin, Diethanolamin, Hexamethylentetramin (Urotropin) oder deren Gemische verwendet.

Die Reaktionsbedingungen für die Nachkondensation sind in den Tabellen 7 und 8 angegeben. Die Parameter des erhaltenen Harzes sind in den Tabellen 9 und 10 angegeben.

### Abkühlung und Stabilisierung des Harzes

Das Harz wird aus dem Behälter ansaugseitig der Umwälzpumpe zugeführt, die den Umlauf des Harzes durch den Wärmetauscher gewährleistet. Das abgekühlte Harz wird dann von der umlaufseitig in den Behälter für das fertige Produkt gegossen. Die Abkühlung des Harzes erfolgt mit stark abgekühltem Wasser bzw. Umlaufwasser auf eine Temperatur von 25°C bei gleichzeitiger Stabilisierung des pHs des Harzes durch Zufuhr von Borax in einer Menge von 0,05 bis 0,1 % bezogen auf seine Masse.

Unter analogen Bedingungen wurde auch ein Harz nach den bekannten Verfahren hergestellt.

**Tabelle 10**

| | Beispiele | | | |
|---|---|---|---|---|
| Harzparameter | erfindungsgemäß | | | bekannt |
| | 1 | 2 | 3 | 4 |
| Viskosität, s | 60 | 48,6 | 40 | 53,5 |
| Massenanteil an Trockenrückstand, % | 75,0 | 72,6 | 68,0 | 68,1 |
| Gelbildungsdauer bei 100°C, s | 35 | 55 | 60 | 59 |
| pH | 7,5 | 8,5 | 8,0 | 7-8 |
| Massenanteil an freiem Formaldehyd, % | 0,08 | 0,09 | 0,07 | 0,23 |
| Maximale Mischbarkeit des Harzes mit Wasser bei 20°C, Vol.t. | 1:9 | 1:8 | 1:10 | 1:3 |
| Formaldehydgehalt in Holzspanplatten, mg/100 g | 7,0 | 6,5 | 6,0 | 12 |

Bei einem Vergleich des erfindungsgemäßen Verfahrens mit dem bekannten lassen sich folgende Unterscheidungsmerkmale feststellen:
Molverhältnis der Reagentien;
Temperatur und pH für die Durchführung der Kondensationsreaktion;
Bedingungen für die Durchführung der Kondensation bis zur Qualität des Endproduktes, und zwar auf dem Wege der Kaltausreifung.

Beim erfindungsgemäßen Verfahren zur Herstellung von Harnstoffformaldehydkondensat wird die Umsetzung im Harnstoffüberschuß bei einer Temperatur von höchstens 45°C in alkalischem Medium unter nachfolgender Reifung des vorgängig abgekühlten Kondensationsproduktes durchgeführt.

### Gewerbliche Verwendbarkeit

Die Verwendung der erfindungsgemäßen Zusammensetzung für die Herstellung der Kondensationslösung auf der ersten Kondensationsstufe ermöglicht die Erzielung der nachfolgend genannten guten Ergebnisse:
das erhaltene Harz weist niedrigen Gehalt an freiem Formaldehyd auf, was die Herstellung von Holzspanplatten der Toxizitätsklasse E0-E1 (DIN EN 120) ermöglicht;
das erhaltene Harz hat einen hohen Gehalt an Trockenrückstand, was seine ausgezeichneten Klebeigenschaften und damit die verbesserten physiko-mechanischen Eigenschaften der Erzeugnisse bewirkt;
das erhaltene Harz ist durch gute Verarbeitungseigenschaften gekennzeichnet, was eine vorzeitige Ausscheidung des Harzes auf den Maschinen während seiner Herstellung verhindert;
das erhaltene Harz ist mit Wasser gut mischbar, was wiederum eine Erweiterung seines Anwendungsgebiets ermöglicht wie z.B. bei der Herstellung von Mineralwatteplatten, Düngemitteln sowie zum Leimen von Papier und Pappe.

Die Durchführung des beanspruchten Verfahrens zur Herstellung von Harnstoffformaldehydkondensat ermöglicht die Herstellung von lagerungsbeständigen Kondensaten mit geringem Gehalt an freiem Formaldehyd mit herabgesetzter Gefriertemperatur bei gleichzeitig einfacherem und kostengünstigerem Verfahren, da die Stufen der Verdampfung des Kondensationsproduktes wegfallen und eine mehrfache Änderung des pH-Werts des Reaktionsgemisches nicht mehr notwendig ist.

Der Einsatz der vorliegenden Erfindung ermöglicht somit, bei minimalem Arbeits- und Energieaufwand eine Verbesserung der Umwelverträglichkeit der Produktion sowie eine Verringerung der Umweltbelastung bei Lagerung, Transport und Verarbeitung des Kondensats infolge der verringerten Ausscheidung von freiem Formaldehyd sowohl während der Herstellung als auch im Fertigprodukt.

## Patentansprüche

1. Verfahren zur Herstellung von Harnstoffformaldehydharz durch Bereitung einer harnstoffhaltigen Kondensationslösung in alkalischem Medium auf der ersten Stufe, Durchführung der Kondensationsreaktion auf der zweiten Stufe in schwach saurem Medium unter Erwärmung und nachfolgender Abkühlung und Trocknung des Reaktionsgemisches, Nachkondensation mit einer zusätzlichen Harnstoffmenge auf der dritten Stufe bei einem Molverhältnis von Harnstoff:Formaldehyd = 1,0:1,0-2,0 unter Erwärmung in einem alkalischen Medium, Abkühlung und Stabilisierung des Reaktionsproduktes, dadurch **gekennzeichnet**, daß man auf der ersten Verfahrensstufe die Kondensationslösung durch Mischen von Harnstoff und Formaldehyd bei einem Molverhältnis von Harnstoff:Formaldehyd von 0,8-2,0:1,0 erhält bzw. ein Gemisch folgender Zusammensetzung (in %) bereitet:
| | |
|---|---|
| Harnstoff | 11,4-20,9 |
| Monomethylolharnstoff | 24,9-33,1 |
| Dimethylolharnstoff | 4,2-9,2 |
| Formaldehyd | 1,9-2,4 |
| Wasser | Rest |
in Anwesenheit eines alkalischen Agens mischt, das erhaltene Kondensat kalt ausreifen läßt, wonach man der Kondensationslösung Formaldehyd bis zu einem Endmolverhältnis von Harnstoff:Formaldehyd von 1,0:1,75-2,1 zusetzt und in schwach saurem Medium weiterkondensiert.

2. Verfahren zur Herstellung von Harnstoffformaldehydkondensat durch Mischen von Harnstoff und wäßriger Fomaldehydlösung in alkalischem Medium und Kondensation unter Erwärmung in alkalischem Medium, dadurch **gekennzeichnet**, daß man die Kondensation bei einem Molverhältnis von Harnstoff: Formaldehyd von 0,8-2,0:1,0 durchführt und das nach der Kondensation erhaltene Produkt durch Ausreifung stabilisiert.

3. Verfahren zur Herstellung von Harnstoffformaldehydharz nach Anspruch 1, dadurch **gekennzeichnet**, daß man die Kondensationslösung bei einer Temperatur von 20 bis 60°C herstellt.

4. Verfahren zur Herstellung von Harnstoffformaldehydharz nach Anspruch 1, dadurch **gekennzeichnet**, daß man als alkalisches Agens wäßrige Lösungen von Alkalimetallhydroxiden, Aminoverbindungen oder Gemischen davon verwendet.

5. Verfahren zur Herstellung von Harnstoffformaldehydharz nach Anspruch 1, dadurch **gekennzeichnet**, daß man das alkalische Agens in einer Menge zusetzt, die auf der Stufe der Herstellung der Kondensationslösung einen pH von 6,0-8,5 und auf der Stufe der Nachkondensation mit der zusätzlichen Harnstoffmenge einen pH von 7,5-8,5 gewährleistet.

6. Verfahren zur Herstellung von Harnstoffformaldehydharz nach Anspruch 1, dadurch **gekennzeichnet**, daß man die Kondensation mit der zusätzlichen Harnstoffmenge bei einer Temperatur von 40 bis 65°C durchführt.

7. Verfahren zur Herstellung von Harnstoffformaldehydharz nach Anspruch 1, dadurch **gekennzeichnet**, daß man das Harnstoffformaldehydkondensat als zusätzliche Harnstoffmenge auf der Stufe der Nachkondensation des Reaktionsgemisches bis zur Erzielung eines Endmolverhältnisses von Harnstoff: Formaldehyd von 1,0:1,0-2,0 verwendet.

8. Verfahren zur Herstellung von Harnstoffformaldehydkondensat nach Anspruch 2, dadurch **gekennzeichnet**, daß man die Kondensation von Harnstoff und Formaldehyd bei einer Temperatur von 5 bis 45°C durchführt.

9. Verfahren zur Herstellung von Harnstoffformaldehydkondensat nach Anspruch 2, dadurch **gekennzeichnet**, daß zur Erzeugung des alkalischen Mediums wäßrige Lösungen von Alkalimetallhydroxiden, Aminoverbindungen oder Gemische davon in einer Menge verwendet werden, die einen pH von 8,2-8,8 gewährleistet.

10. Verfahren zur Herstellung von Harnstoffformaldehydkondensat nach Anspruch 2, dadurch **gekennzeichnet**, daß man die kalte Ausreifung des Kondensationsproduktes während mindestens 3 Stunden durchführt.
